# EUROPEAN PATENT SPECIFICATION

(11) **EP 3 076 152 B1**
(45) Date of publication and mention of the grant of the patent: **24.03.2021**
(21) Application number: 14866310.7
(22) Date of filing: 25.11.2014
(51) Int. Cl.: G01N 1/32, C23F 1/28

(54) **KIT OF THREE REAGENT COMPOSITIONS FOR DETECTING STEEL MACROSTRUCTURE AND DEFECT, AND DETECTION METHOD**
KIT DREIER REAGENZZUSAMMENSETZUNGEN ZUM NACHWEIS EINES STAHLMAKROGEFÜGES UND DEFEKTS SOWIE DETEKTIONSVERFAHREN
KIT DE TROIS COMPOSITIONS DE RÉACTIFS PERMETTANT DE DÉTECTER DES MACROSTRUCTURES ET DÉFAUTS DANS L'ACIER, ET PROCÉDÉ DE DÉTECTION

(30) Priority: 30.11.2013 CN 201310640094
(43) Date of publication of application: 05.10.2016
(73) Proprietor: Institute of Metal Research Chinese Academy of Sciences, Shenyang, Liaoning 110016 (CN)
(72) Inventor: GAI, Xiuying, Shenyang Liaoning 110016 (CN); LIU, Jinzhu, Shenyang Liaoning 110016 (CN); LIU, Yanmei, Shenyang Liaoning 110016 (CN); LIU, Hongwei, Shenyang Liaoning 110016 (CN); WANG, Yanyan, Shenyang Liaoning 110016 (CN)
(74) Representative: Mewburn Ellis LLP
(86) International application number: PCT/CN2014/092110
(87) International publication number: WO 2015/078347

(56) References cited:
- WO-A1-2009/118129
- CN-A- 101 587 040
- CN-A- 101 706 385
- CN-A- 101 975 742
- CN-A- 102 284 685
- JP-A- S58 167 772
- SU-A1- 1 057 800
- SU-A1- 1 718 005

## Description

### Technical Field

The present invention belongs to the technical field of metallography detection, and specifically involves a kit of three reagent compositions and a detection method for detecting steel macrostructures and defects using the kit of three reagent compositions.

### Background

Currently, China is under an urgent need for supportive, high-quality large casting and forgings in the development of major technical equipment development and major construction projects, such as energy & power, metallurgical machinery, petrochemical industry, and ship engineering. The industry of large castings and forgings is indispensable for China to become a powerful industrial country. Traditional manufacturing processes of castings and forgings depend on experience, and can be difficult in forming castings and forgings, preventing defects, and controlling performances. Furthermore, large casting and forgings rely on the analysis of macrostructures and defects to develop and optimize the casting and forging process. For example, nine classification societies including Lloyd's Register require inspection for the marine crank streamline of large ships.

The existing detection of macrostructure and defects mainly relies on GB226 standard. The standard provides two testing methods: The first method, hot acid etching method, requires a sample with a roughness on the surface no larger than Ra1.6µm be heated in acid to 60-75°C for 5 to 15 minutes The other method, cold acid etching method, has high requirements for surface finish; the surface shall have a roughness no larger than Ra0.8µm, and shall eliminate all oil stains and processing scars.

However, the sample sizes of large castings and forgings are especially large, generally above 1.0 m × 1.0 m × 0.8 m. If such a big cross session were to be eroded with hot acid, the size of a hot acid tank shall be around 2.0 m × 2.0 m × 1.6 m; large quantities of acids are needed, leading to serious pollution to the environment. Moreover, the corresponding heating device, hoisting equipment, and test sites for this method have very high cost. Meanwhile, since no suitable equipment can be found to process such a large experimental surface, it is difficult produce a surface finish that satisfies the current GB226 standard requirement. The current rapid treatment to the surface employs a milling cutter to process the experimental surface, leading to a roughness no higher than Ra3.2µm. However, for such processing roughness, the macrostructure cannot be eroded out by the existing standard cold acid etching method. Moreover, after the sample surface is manually polished, although the local surface finish is increased, a scraggly surface could lead to poor surface homogeneity. Moreover, the surface has declined flatness and is accompanied with original machining marks. Therefore, it is difficult to make large castings and forgings into metallographic samples with satisfying surface finish and flatness for existing detection methods.

In conclusion, the existing hot acid etching method requires large amount of acid usage that could lead to serious environmental problems. It also requires high equipment cost and site cost, and cannot be applied to detecting macrostructures and defects of large casting and forgings. On the other hand, large castings and forgings are difficult to be processed into samples with satisfying surface finish and flatness, and cannot meet the criteria of existing methods.

CN 102 284 685 A discloses a reagent for detecting steel macrostructure and defects.

### Summary

In view of this, this invention provides a kit of three reagent compositions and a detection method for steel macrostructures and defects. The method can reveal the metallurgical defects and macrostructures of steel samples without the need to undergo thermal erosion and has relatively low requirements for surface smoothness and flatness.

The present invention discloses a kit of three reagent compositions for detecting steel macrostructure and defects.. The first reagent composition is 5-10wt% H₂SO₄, 20-25wt% HNO₃, and 65-75wt% H₂O; the second reagent composition is 25-35wt% HNO₃, and 65-75wt% H₂O; the third reagent composition is 3-5wt% HNO₃ and 95-97wt% H₂O.

Furthermore, the optimal composition for the first reagent composition is 7wt% H₂SO₄, 20wt% HNO₃, and 73wt% H₂O; the optimal composition for the second reagent composition is 30wt% HNO₃, and 70wt% H₂O; the optimal composition for the third reagent composition is 5wt% HNO₃, and 95wt% H₂O.

In this invention, the first reagent composition functions to corrode streamline, dendritic solidification structure, etc.; the second reagent composition functions to corrode the shape of a crystal grain; and the third reagent composition functions to homogenize a corroded detected surface.

This invention also discloses a method for steel macrostructure and defect detection with the above kit of three reagent compositions. The protocol is as follows:
(i) preprocess the machined sample surface;
(ii) etch the sample surface with the first reagent composition for 20-30 minutes; wash the sample surface;
(iii) etch the sample surface with the second reagent composition for 10-20 minutes; wash the sample surface;
(iv) etch the sample surface with the third reagent composition for 3-5 minutes; wash and blow-dry the sample surface;
(v) scan and image the sample surface with a scanner, and process the obtained images.

Further, in step (i), the preprocessing may include polishing to remove processing traces on the sample surface and removing oil stains on the surface. This invention has the following advantages: this invention reveals the metallurgical defects and macrostructure of steel through cold acid corrosion with reagents of reasonable compositions; thermal corrosion is no longer necessary. This invention greatly reduces the amount of acid needed, minimizes the accompanying environmental corrosion, and solves equipment and site problems. Moreover, this invention has low requirements for surface smoothness and flatness, and solves the difficulty in processing large-sample surface, as well as the problems of poor smoothness and flatness of manually processed surfaces. The present invention is especially applicable to the detection of macrostructure and defects of large castings and forgings.

### Description of the Drawings

To further clarify the purpose, technical solutions, and the advantages of this invention, this invention will be further described in detail with corresponding pictures:
Fig. 1: photograph I of macrostructure and defects of hundred-ton steel ingot section processed by Example 1;
Fig. 2: photograph II of macrostructure and defects of hundred-ton steel ingot section processed by Example 1;
Fig. 3: photograph I of a streamline and macrostructure shape of a crank forging processed by Example 2;
Fig. 4: photograph II of a streamline and macrostructure shape of a crank forging processed by Example 2;
Fig. 5: photograph III of a streamline and macrostructure shape of a crank forging processed by Example 2; and
Fig. 6: photographs of A segregation shape and macrostructure shape of No.45 steel grit type steel ingot processed by Example 3; (b) is a local enlargement of (a).

### Detailed Description

The present invention will be described below in details through preferred examples with reference to the drawings. In the following examples, the surfaces of the samples were preprocessed with alcohol to remove oil stains on the surface, and were washed with water after corrosion.

### Example 1

The composition of the first reagent composition is: 7wt% H₂SO₄, 20wt% HNO₃, and 73wt% H₂O; the composition of the second reagent composition is: 30wt% HNO₃ and 70wt% H₂O; the composition of the third reagent composition is: 5wt% HNO₃, and 95wt% H₂O.

The method for detecting steel macrostructure and defects by using the kit of three reagent compositions in the example is as follows:
(i) The sample in the example is a hundred-ton low-pressure rotor steel ingot (material designation is 30CrNiMoV). The size of the section is 3.6 m × 2.5 m. The machined sample surface is preprocessed. The preprocessing includes polishing the surface to remove processing traces and removing surface oil stains. A portable angle grinder is adopted for polishing. Although flatness differences exist on the sample surface and machining traces in some regions are not removed, the detection result is not affected.
(ii) etch the sample surface with the first reagent composition for 20 minutes; then wash the sample surface;
(iii) etch the sample surface with the second reagent composition for 20 minutes; then wash the sample surface;
(iv) etch the sample surface with the third reagent composition for 3 minutes; then wash and blow-dry the sample surface; and
(v) scan and image the sample surface with a scanner, and process the obtained images.

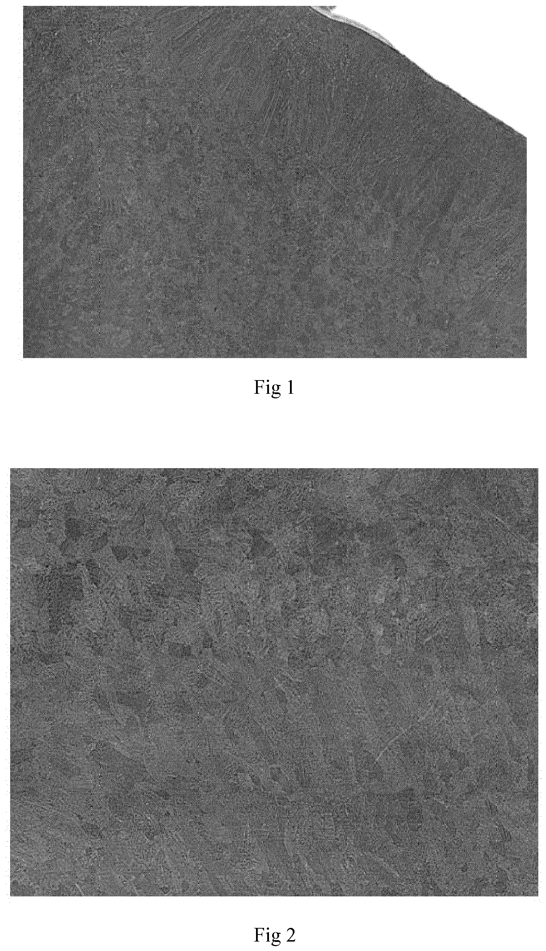

Fig. 1 and Fig. 2 are photographs of macrostructure and defects of hundred-ton steel ingot section processed from Example 1. It can be clearly seen from Fig. 1 that the depth of columnar grains is 150 mm and the grain size of equiaxial region is 5-15 mm. In Fig 2, equiaxial grains with different orientiation could be clearly observed.

### Example 2

The composition of the first reagent composition is: 5wt% H₂SO₄, 25wt% HNO₃, and 70wt% H₂O; the composition of the second reagent composition is: 35wt% HNO₃ and 65wt% H₂O; the composition of the this reagent composition is: 3wt% HNO₃, and 97wt% H₂O.

The method for detecting steel macrostructure and defects by using the kit of three reagent compositions in the example is as follows:
(i) The sample in the example is a K90ML-L crank forging. The machined sample surface is preprocessed. The preprocessing includes polishing the surface to remove processing traces and removing surface oil stains. A portable angle grinder is adopted for polishing. Although flatness differences exist on the sample surface and machining traces in some regions are not removed, the detection result is not affected
(ii) etch the sample surface with the first reagent composition for 30 minutes; then wash the sample surface;
(iii) etch the sample surface with the second reagent composition for 15 minutes; then wash the sample surface;
(iv) etch the sample surface with the third reagent composition for 4 minutes; then wash and blow-dry the sample surface; and
(v) scan and image the sample surface with a scanner, and process the obtained images.

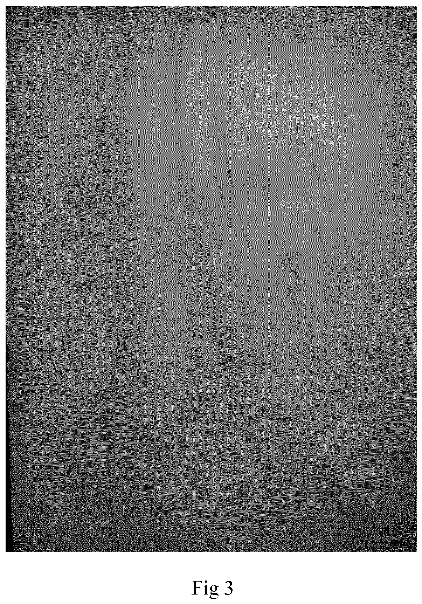

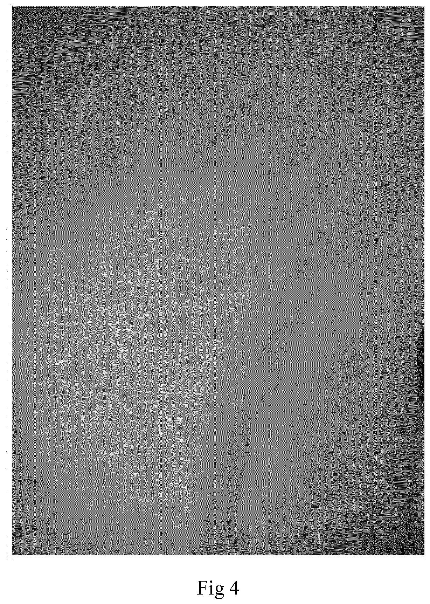

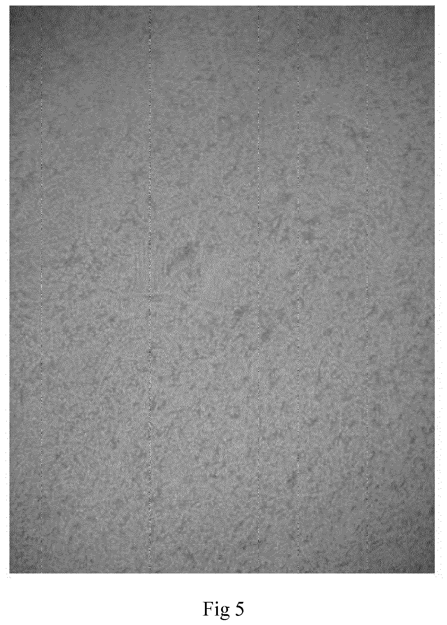

Fig. 3, Fig. 4 and Fig. 5 are photographs of streamlines and macrostructures of the crank forging processed from Example 2. From the figure, under low power, no streamline disorder such as cutting, reflux, or vortex can be observed, but segregation strips are present.

### Example 3

The composition of the first reagent composition is: 10wt% H₂SO₄, 25wt% HNO₃, and 65wt% H₂O; the composition of the second reagent composition is: 25wt% HNO₃ and 75wt% H₂O; the composition of the third reagent composition is: 4wt% HNO₃, and 96wt% H₂O.

The method for detecting steel macrostructure and defects by using the kit of three reagent compositions in the example is as follows:
(i) The sample in the example is a No.45 steel grit type steel ingot. The machined sample surface is preprocessed. The preprocessing includes polishing the surface to remove processing traces and removing surface oil stains. A portable angle grinder is adopted for polishing. Although flatness differences exist on the sample surface and machining traces in some regions are not removed, the detection result is not affected
(ii) etch the sample surface with the first reagent composition for 25 minutes; then wash the sample surface;
(iii) etch the sample surface with the second reagent composition for 10 minutes; then wash the sample surface;
(iv) etch the sample surface with the third reagent composition for 5 minutes; then wash and blow-dry the sample surface; and
(v) scan and image the sample surface with a scanner, and process the obtained images.

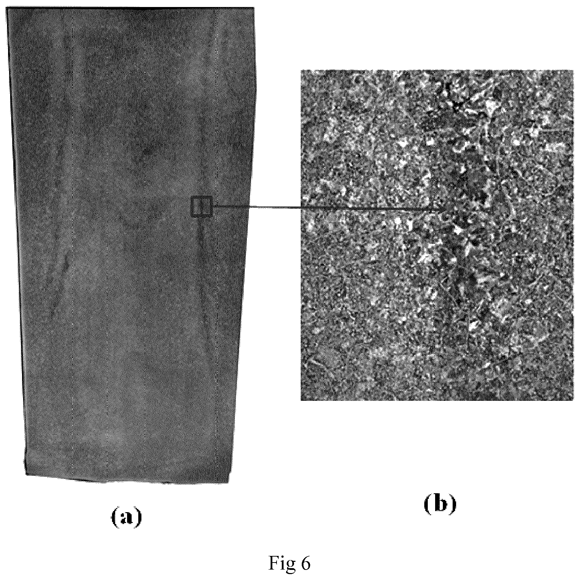

Fig. 6 is photographs of macrostructure and defects of No.45 steel grit type steel ingot processed from Example 3. From the figure, symmetric distribution of A segregation could be observed in the longitudinal section of the steel ingot; and shrinkage defects can also be detected in the A segregation region.

Finally, it should be noted that the above examples are only used for describing, not limiting, the technical solutions of the present invention. Although the present invention is already illustrated through optimized examples, technicians in this filed should understand that various changes in forms and details can be made to this invention without departing from the scope of the claims.

## Claims

1. A kit of three reagent compositions for detecting steel macrostructure and defects, wherein
the first reagent composition is 5-10wt% H₂SO₄, 20-25wt% HNO₃ and 65-75wt% H₂O ;
the second reagent composition is 25-35wt% HNO₃ and 65-75wt% H₂O;
the third reagent composition is 3-5wt% HNO₃ and 95-97wt% H₂O.

2. The kit of three reagent compositions for detecting steel macrostructure and defects according to claim 1, wherein the first reagent composition is 7wt% H₂SO₄, 20wt% HNO₃, and 73wt% H₂O.

3. The kit of three reagent compositions for detecting steel macrostructure and defects according to claim 1, wherein the second reagent composition is 30wt% HNO₃ and 70wt% H₂O.

4. The kit of three reagent compositions for detecting steel macrostructure and defects according to claim 1, wherein the third reagent composition is 5% HNO₃, and 95% H₂O.

5. A method for detecting steel macrostructure and defects by using the kit of three reagent compositions of claims 1-4, which comprises the following steps:
(i) preprocessing a machined sample surface;
(ii) etching the sample surface with the first reagent composition for 20-30 minutes; washing the sample surface;
(iii) etching the sample surface with the second reagent composition for 10-20 minutes; washing the sample surface;
(iv) etching the sample surface with the third reagent composition for 3-5 minutes; washing and blow-drying the sample surface; and
(v) scanning and imaging the sample surface with a scanner, and processing the obtained images.

6. The method for detecting steel macrostructure and defects according to claim 5, wherein: in step (i), said preprocessing comprises polishing the sample surface to remove processing traces and removing oil stains on the surface.

## Patentansprüche

1. Set aus drei Reagenszusammensetzungen zum Detektieren einer Stahlmakrostruktur und von Defekten, wobei
die erste Reagenszusammensetzung 5-10 Gew.-% H₂SO₄, 20-25 Gew.-% HNO₃ und 65-75 Gew.-% H₂O ist;
die zweite Reagenszusammensetzung 25-35 Gew.-% HNO₃ und 65-75 Gew.-% H₂O ist;
die dritte Reagenszusammensetzung 3-5 Gew.-% HNO₃ und 95-97 Gew.-% H₂O ist.

2. Set aus drei Reagenszusammensetzungen zum Detektieren einer Stahlmakrostruktur und von Defekten nach Anspruch 1, wobei die erste Reagenszusammensetzung 7 Gew.-% H₂SO₄, 20 Gew.-% HNO₃ und 73 Gew.-% H₂O ist.

3. Set aus drei Reagenszusammensetzungen zum Detektieren einer Stahlmakrostruktur und von Defekten nach Anspruch 1, wobei die zweite Reagenszusammensetzung 30 Gew.% HNO₃ und 70 Gew.-% H₂O ist.

4. Set aus drei Reagenszusammensetzungen zum Detektieren einer Stahlmakrostruktur und von Defekten nach Anspruch 1, wobei die dritte Reagenszusammensetzung 5 Gew.-% HNO₃ und 95 Gew.-% H₂O ist.

5. Verfahren zum Detektieren einer Stahlmakrostruktur und von Defekten unter Verwendung eines Sets aus drei Reagenszusammensetzungen nach einem der Ansprüche 1-4, das die folgenden Schritte umfasst:
(i) Vorbearbeiten einer mechanisch bearbeiteten Probenoberfläche;
(ii) Ätzen der Probenoberfläche mit der ersten Reagenszusammensetzung für 20-30 Minuten; Waschen der Probenoberfläche;
(iii) Ätzen der Probenoberfläche mit der zweiten Reagenszusammensetzung für 10-20 Minuten; Waschen der Probenoberfläche;
(iv) Ätzen der Probenoberfläche mit der dritten Reagenszusammensetzung für 3-5 Minuten; Waschen und Trockenblasen der Probenoberfläche; und
(v) Scannen und Abbilden der Probenoberfläche mit einem Scanner und Verarbeiten der erhaltenen Abbildungen.

6. Verfahren zum Detektieren einer Stahlmakrostruktur und von Defekten nach Anspruch 5, wobei in Schritt (i) das Vorbearbeiten das Polieren der Probenoberfläche zum Entfernen von Bearbeitungsspuren und das Entfernen von Ölspuren auf der Oberfläche umfasst.

## Revendications

1. Kit de trois compositions réactives pour détecter une macrostructure d'acier et des défauts, dans lequel
la première composition réactive est constituée de 5 à 10 % en poids de H₂SO₄, de 20 à 25 % en poids de HNO₃ et de 65 à 75 % en poids de H₂O ;
la deuxième composition réactive est constituée de 25 à 35 % en poids de HNO₃ et de 65 à 75 % en poids de H₂O ;
la troisième composition réactive est constituée de 3 à 5 % en poids de HNO₃ et de 95 à 97 % en poids de H₂O.

2. Kit de trois compositions réactives pour détecter une macrostructure d'acier et des défauts selon la revendication 1, dans lequel la première composition réactive est constituée de 7 % en poids de H₂SO₄, de 20 % en poids de HNO₃ et de 73 % en poids de H₂O.

3. Kit de trois compositions réactives pour détecter une macrostructure d'acier et des défauts selon la revendication 1, dans lequel la deuxième composition réactive est constituée de 30 % en poids de HNO₃ et de 70 % en poids de H₂O.

4. Kit de trois compositions réactives pour détecter une macrostructure d'acier et des défauts selon la revendication 1, dans lequel la troisième composition réactive est constituée de 5 % de HNO₃, et de 95 % de H₂O.

5. Procédé pour détecter une macrostructure d'acier et des défauts en utilisant le kit de trois compositions réactives selon les revendications 1 à 4, qui comprend les étapes suivantes consistant à :
(i) prétraiter une surface d'échantillon usinée ;
(ii) attaquer chimiquement la surface d'échantillon avec la première composition réactive pendant 20 à 30 minutes ; laver la surface d'échantillon ;
(iii) attaquer chimiquement la surface d'échantillon avec la deuxième composition réactive pendant 10 à 20 minutes ; laver la surface d'échantillon ;
(iv) attaquer chimiquement la surface d'échantillon avec la troisième composition réactive pendant 3 à 5 minutes ; laver et sécher la surface d'échantillon ;
(v) balayer et imager la surface d'échantillon avec un dispositif de balayage, et traiter les images obtenues.

6. Procédé pour détecter une macrostructure d'acier et des défauts selon la revendication 5, dans lequel : dans l'étape (i), ledit prétraitement comprend un polissage de la surface d'échantillon pour éliminer des traces de traitement et éliminer les taches d'huile sur la surface.
